# EUROPEAN PATENT APPLICATION

(11) **EP 2 472 220 A1**
(43) Date of publication of application: **04.07.2012**
(21) Application number: 10811944.7
(22) Date of filing: 26.08.2010
(51) Int. Cl.: G01B 11/24, G01B 11/25, G06T 7/60

(54) **THREE-DIMENSIONAL SHAPE MEASUREMENT METHOD AND THREE-DIMENSIONAL SHAPE MEASUREMENT SYSTEM**

(30) Priority: 28.08.2009 JP 2009198232
(71) Applicant: Kabushiki Kaisha Opton, Seto-shi Aichi 489-8645 (JP)
(72) Inventor: YOGO, Teruaki, Aichi 489-8645 (JP)
(74) Representative: Otten, Roth, Dobler & Partner
(86) International application number: PCT/JP2010/064483
(87) International publication number: WO 2011/024895

(57) **Abstract**

An object to be measured is measured with marks formed on a platen surface with the object to be measured mounted thereon. At least three or more marks are formed on the platen surface. The marks are formed so as to uniquely determine a combination of sizes of at least three marks arbitrarily selected and intervals between the marks. Coordinate values representing three-dimensional shapes at first and second portions of the object are converted respectively to coordinate values based upon a reference coordinate system identified by the marks. The coordinate values determined after the conversion are synthesized, so that data on the entire three-dimensional shape of the object is obtained.

## Description

### CROSS-REFERENCE TO RELATED APPLICATIONS

This international application claims the benefit of Japanese Patent Application No. 2009-198232 filed August 28, 2009 at the Japan Patent Office, and the entire disclosure of Japanese Patent Application No. 2009-198232 is incorporated herein by reference.

### FIELD OF THE INVENTION

The present invention relates to a three-dimensional shape measuring method and a three-dimensional shape measuring system for measuring a three-dimensional shape of an object to be measured.

### BACKGROUND ART

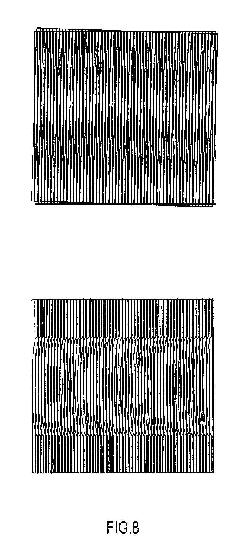

There have been conventionally known a method of measuring a shape from an interference fringe (named moire as well) created at a time of overlapping two lattice patterns, as a method of measuring a three-dimensional shape of an object to be measured. For example, moire topography has been well known. This method includes steps of: projecting a lattice pattern on an object to be measured; overlapping a lattice pattern serving as a reference and the lattice pattern projected on the object to be measured (more specifically, a lattice pattern distorted in accordance with an outer shape of the object to be measured); and analyzing moire created by the overlapping. Moire is a striped pattern (interference fringe) created visually when there is a cycle difference between one lattice pattern and the other lattice pattern. In this moire, a pattern, which is called a contour, appears in accordance with a distortion in a cycle of the one lattice pattern (i.e., in accordance with the outer shape of the object to be measured) (see, FIG.8). A three-dimensional shape of the object to be measured can be measured by analyzing this sort of moire.

Further, a following method has been also known. Specifically, the method includes steps of: emitting a slit light on an object to be measured; slanting the slit light and scanning the object to be measured by the slit light; receiving a reflected light that is created by scanning the object to be measured and emitted therefrom. According to this method, a three-dimensional shape can be measured based upon a distortion degree of the slit light (reflected light) distorted based upon a surface shape of the object to be measured.

In these types of measuring methods, whatever it is, a partial image, or a whole image, of an object to be measured is captured by an image-capturing apparatus (e.g., a CCD camera), and the above-described moire or slit light (reflected light) is analyzed.

Depending on the size of an object to be measured (for example, when the object to be measured is relatively small), a sufficient measuring precision can be obtained by performing a singular image-capturing of an entire of the object to be measured and analyzing the captured image. Meanwhile, depending on the size of the object to be measured (for example, when the object to be measured is relatively large), there is a case where a sufficient measuring precision can not be obtained when an image of an entire of the object to be measured is captured only by a singular image-capturing.

Under the latter situation (when a sufficient resolution can not be obtained), a method of performing image-capturing separately and measuring separately can be employed. Specifically, a portion of the object to be measured is image-captured and a three-dimensional shape of the portion captured is measured. Next, the other portion other than the portion already captured is image-captured and a three-dimensional shape of the other portion is measured. Through repetition of this type of measuring, a method of measuring an entire three-dimensional shape of the object to be measured can be employed. That is, individual measured values obtained as a result of separate measuring are synthesized, so that data of an entire three-dimensional shape of the object to be measured can be obtained.

Patent Document 1 discloses a method of segmenting and measuring a three-dimensional shape of an object to be measured. According to the method disclosed in Patent Document 1, a plurality of targets is attached on an object to be measured. At a time of measuring a three-dimensional shape, the object to be measured is image-captured so as to include a predetermined target in captured regions. Specifically, the object to be measured is image-captured through two successive image-capturing so as to include a common target in both captured regions. Two captured image data, i.e., data on measured three-dimensional shapes, are synthesized with the common target as a reference.

### PRIOR ART DOCUMENTS

### PATENT DOCUMENTS

Patent Document 1: Japanese Unexamined Patent Application Publication No. 2004-220510

### SUMMARY OF THE INVENTION

### PROBLEMS TO BE SOLVED BY THE INVENTION

However, according to this sort of known method, it is needed to attach many targets on an object to be measured depending on a size of the object to be measured. In this case, it requires time and effort to attach the targets. Further, according to the known methods, there is a problem that a three-dimensional shape of a region of the object to be measured, where the targets are attached to, can not be measured due to the presence of the targets.

An object of the present invention is to achieve an easy and through measurement of a whole three-dimensional shape of an object to be measured.

### MEANS FOR SOLVING THE PROBLEMS

A method of measuring a three-dimensional shape of an object to be measured by use of a three-dimensional shape measuring apparatus includes the steps of: forming a plurality of marks, which is at least three or more, on a background surface configured as a background of the object to be measured at a time of three-dimensionally measuring of the object to be measured, wherein the plurality of marks are formed so as to uniquely determine a combination of respective sizes of at least three marks arbitrarily selected from among the plurality of marks and intervals between the marks; storing information on arrangement of the formed marks in a storing device; three-dimensionally measuring a partial shape of, or an entire shape of, the object to be measured by the three-dimensional shape measuring apparatus, wherein a region, which is a measurement target, is divided into a plurality of regions and the three-dimensional measuring is performed, and the shape of the object to be measured is three-dimensionally measured with the at least three marks each time that each of the plurality of regions is measured; each time that each of the plurality of regions is measured, converting, based upon information of the measured marks and the information on arrangement of stored marks that are the marks stored by the storing device, X-Y-Z coordinate values representing a three-dimensional shape of the object to be measured to coordinate values in a reference coordinate system based upon the information on arrangement of the marks stored; and synthesizing coordinate values obtained after the X-Y-Z coordinate values are converted to the coordinate values in the reference coordinate system for each of the plurality of regions.

According to the present invention, common marks may be measured at adjacent measured regions. For example, a method of measuring a three-dimensional shape of an object to be measured by use of a three-dimensional shape measuring apparatus can include the steps of: forming a plurality of marks, which is at least three or more, on a background surface configured as a background of the object to be measured at a time of three-dimensionally measuring of the object to be measured, wherein the plurality of marks are formed so as to uniquely determine a combination of respective sizes of at least three marks arbitrarily selected from among the plurality of marks and intervals between the marks; storing information on arrangement of the formed marks in a storing device; three-dimensionally measuring a partial shape of, or an entire shape of, the object to be measured by the three-dimensional shape measuring apparatus, wherein a region, which is a measurement target, is divided into a plurality of regions and the three-dimensional measuring is performed, and the shape of the object to be measured is three-dimensionally measured with the at least three marks, which are shared by at least two adjacent regions, when the at least two adjacent regions are measured; converting X-Y-Z coordinate values, which are measured values obtained by measuring for two adjacent regions and represent a three-dimensional shape of the object to be measured, to coordinate values at a common coordinate system based upon the at least three marks shared by the two regions; and synthesizing coordinate values converted to values at the common coordinate system for each of the plurality of regions.

The method of the present invention may include the step of forming the marks to be round by at least one of machine processing, printing, and putting stickers. Especially, the method may include the step of forming, by machine processing, the marks into holes having a predetermined depth from a surface of the background surface and a bottom.

In the present invention, the background surface may be a flat surface, and the method may include the step of mounting the object to be measured on the background surface.

Further, in the present invention, the background surface may be a flat surface. In this case, the step of measuring the three-dimensional shape of the object to be measured can include the step of identifying the background surface based upon the at least three marks measured each time that each of the plurality of regions are measured. The step of converting may include at least the step of correcting the X-Y-Z coordinate values for each measurement in such a manner that data denoting the background surface identified for each measurement indicate an identical background surface.

The present invention may be a three-dimensional shape measuring system that achieves the aforementioned methods.

### EFFECTS OF THE INVENTION

According to the present invention, even when a three-dimensional shape of an object to be measured is measured in a condition where a measured region is divided, the measurement results can be easily synthesized due to marks provided at a background surface. Further, since there is no need to provide marks at an object to be measured itself, it is possible to avoid generating a portion of the object to be measured, which can not be measured.

### BRIEF DESCRIPTION OF THE DRAWINGS

FIG. 1 is a schematic view of a three-dimensional shape measuring system according to an embodiment.
FIG. 2 is an arrangement view of marks formed on a platen surface according to the embodiment.
FIG. 3 is a flowchart of a process of measuring a three-dimensional shape executed by a control device according to the embodiment.
FIG. 4 is an explanatory view explaining a method of a three-dimonsional shape.
FIG. 5 is a flowchart of a process of measuring a three-dimensional shape executed by a control device according to a second embodiment.
FIG. 6 is a flowchart of a synthesizing process executed by the control device according to the second embodiment.
FIG. 7 is an explanatory view explaining a measuring method according to the second embodiment.
FIG. 8 is a view illustrating an example of an interference fringe and a contour.

### EXPLANATION OF REFERENCE NUMERALS

- 1...: object
- 3...: measuring unit
- 6...: fringe projector
- 10...: platen
- 14...: mark
- 2...: measuring device
- 4...: CCD camera
- 8...: control device
- 12...: platen surface

### MODE FOR CARRYING OUT THE INVENTION

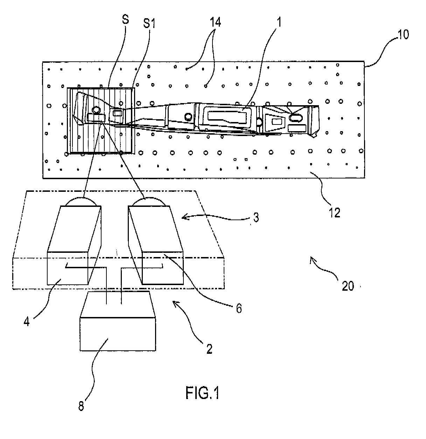

Hereinafter, embodiments for carrying out the present invention will be described in detail with reference to the drawings. FIG. 1 is a schematic view of a three-dimensional shape measuring system 20 (hereinafter, referred to simply as a system 20) which the present invention is applied to.

The system 20 is provided with a measuring device 2 to measure a three-dimensional shape and a platen 10. In FIG.1, an object 1, being an object to be measured, is for example a press-molded object applied with press forming (plastic forming) and possesses a cubic shape (hereinafter, also referred to as a three-dimensional shape). The object 1 is mounted on a platen surface 12 of the platen 10. The three-dimensional shape of the object 1 is measured by the measuring device 2.

The measuring device 2 includes a CCD camera 4, a fringe projector 6, and a control device 8. The CCD camera 4 and the fringe projector 6 are connected so as to communicate data with the control device 8 and configure a measuring unit 3. The measuring unit 3 is configured so as to be movable manually or automatically. The CCD camera 4, the fringe projector 6, and the control device 8 can be configured so as to be movable as a unit.

The fringe projector 6 is provided with at least a light source (not illustrated) and a slit member (not illustrated) having a plurality of slits being arranged. The light emitted from the light source is reflected on the object 1 via the slit member (see, a region S in FIG. 1). That is, the object 1 is exposed with a striped patterned (lattice patterned) light by the fringe projector 6 (hereinafter, the light pattern is also referred to as a lattice pattern).

The CCD camera 4 is configured so as to be able to capture an image of a predetermined region (a region S1 in FIG. 1). A range (area) of the region S1 is changeable depending on a position, or a settings change, of the CCD camera 4. The region S1 is fitted in the region S that is a region exposed with the lattice pattern by the fringe projector 6, and has a smaller area than the area of the region S. According to the other embodiment, the region S may match with the region S1 (the area of the region S may be the same as the area of the region S1). Further, as far as both the region S and the region S1 cover the object 1, the region S1 may be greater than the region S.

The CCD camera 4 captures the lattice pattern exposed to the object 1 by the fringe projector 6 and distorted in response to the outer shape of the object 1. The image data captured by the CCD camera 4 is transmitted to the control device 8.

The control device 8 compares the lattice pattern, which is expressed by the image capture data by the CCD camera 4 (hereinafter, referred to as an imaged lattice pattern), with a reference lattice pattern stored in advance and described later, and calculates a distortion degree of the imaged lattice pattern. Specifically, a pattern, which is called a contour and is found in an interference fringe created by a mismatch between the imaged lattice pattern and the reference lattice pattern, is analyzed. The contour appears uniquely in response to a degree of the mismatch between the imaged lattice pattern and the reference lattice pattern (a distortion degree of the imaged lattice pattern). The three-dimensional shape of the object 1 is calculated based upon the distortion degree calculated. Here, while the imaged lattice pattern is a pattern having a distortion based upon the shape of the object 1, the reference lattice pattern is a lattice pattern with no distortion, i.e., a lattice pattern that works as a reference to calculate the distortion of the imaged lattice pattern. FIG. 8 illustrates an example of the interference fringe and the contour.

Regarding the measuring device 2, the greater the region S1 captured by the CCD camera 4 is, the more the resolution of the captured image lowers, so that a measuring precision of the three-dimensional shape of the object 1 deteriorates. On the other hand, the smaller the region S1 is, the captured image exhibits a sufficiently-high resolution, so that the measuring precision of the three-dimensional shape of the object 1 is improved. Therefore, in order to obtain an adequate measuring precision, the size of the region S1 can be needed to be limited depending on the size of the object 1 or the performance (resolution) of the CCD camera 4. For example, a sufficient measuring precision may not be secured if an entire three-dimensional shape of the object 1 is to be measured through only one image capturing. In this case, dividing the object 1 into predetermined regions and image-capturing the regions more than once is suggested.

The measuring device 2 of the embodiment is configured so as to be able to easily measure the entire three-dimensional shape of the object 1 by conducting multiple image-capturing while the region S1 is displaced in response to the movement of the CCD camera 4 (more specifically, the movement of the measuring unit 3). Detailed description will be given below.

The measuring device 2 (more specifically, the control device 8) outputs, every image capturing, a measured value based upon a partial coordinate system described later (in other words, a value representing the three-dimensional shape of the object 1 and including at least an X coordinate value, a Y coordinate value, and a Z coordinate value). The partial coordinate system is an X-Y-Z coordinate system with its origin at an arbitrary point.

The partial coordinate system is a local coordinate system of the measuring device 2. More specifically, the partial coordinate system is a coordinate system that would change in response to a position of the measuring unit 3 (in other words, an image capturing region). For example, when the three-dimensional shape of the object 1 is measured in a condition where the measuring unit 3 is moved and the region S1 is displaced, the partial coordinate system would vary every measuring. According to the embodiment, the coordinate system varies every image capturing, and the measuring device 2 calculates a measured value every measuring with reference to a partial coordinate system specific to the measuring.

Meanwhile, the control device 8 is prepared in advance with a coordinate system, which is different from the partial coordinate system and works as a reference (hereinafter, also referred to as the reference coordinate system). In other words, the control device 8 stores in advance information denoting the reference coordinate system. Specifically, the control device 8 stores in advance information on a predetermined origin coordinate and the X-axis, Y-axis, and Z-axis with reference to the origin position of the origin coordinate. Details on the reference coordinate system will be given later. The control device 8 converts measured values based upon the partial coordinate systems to measured values based upon the reference coordinate system, and can calculate the entire three-dimensional shape of the object 1 by integrating the measured values based upon the partial coordinate systems.

The platen 10 includes the platen surface 12 on which the object 1 is mounted. The platen surface 12 is finished so as to be a flat surface of which flatness is approximated to zero. Further, it is preferable that the platen 10 is arranged in a manner that the platen surface 12 is in parallel with a not-illustrated horizontal surface.

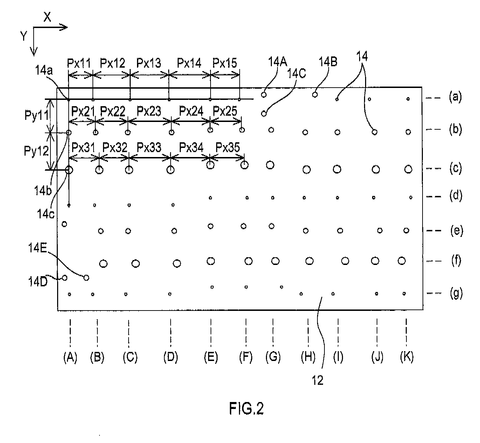

As illustrated in FIGS. 1 and 2, the platen surface 12 is formed with multiple marks 14. The marks 14 are each cylindrically-shaped bores formed in the platen surface 12. The marks 14 (bores) do not penetrate the platen 10 and possess a predetermined depth. According to the embodiment, the depth of the mark 14 is 4 mm. It is preferable that this type of mark 14 is formed by machine processing. More specifically, it is preferable to enhance, by machine processing, roundness of an opening portion of each of the marks 14 and position accuracy thereof.

According to the embodiment, there are the plural types of marks 14 having different diameters, respectively. In addition, the marks 14 are arranged so that a distance between adjacent ones of the marks 14 varies (at least, there are multiple kinds of values regarding the distance between adjacent ones of the marks 14).

According to the embodiment, there are differences in the diameters of the marks 14 and the distances between the adjacent marks 14. Therefore, if at least three marks 14 are selected, it is possible to uniquely identify which marks 14 on the platen surface 12 are selected as the three marks 14. As the three marks 14 to be selected, the three marks 14, which are arranged to exhibit a triangle shape for example, can be conceived.

Further, according to another embodiment, colored (e.g., black) bushes can be inserted into the bores of the marks 14 such that a contrast between the marks 14 and the platen surface 12 can be assured. That is, the bushes can be identified as the marks 14.

The marks 14 are not limited to something having a predetermined depth. For example, as far as the marks 14 can be identified by the CCD camera 4, the marks 14 can penetrate the platen 10. The marks 14 can be formed by printing, stickers or the like. Specifically, the marks 14 can be formed by printing or putting stickers on the platen surface 12.

According to the embodiment, the marks 14 are each formed with one of 8 mm, 12 mm and 16 mm in diameter. Hereinafter, further explanation will be given with reference to FIG. 2. In FIG. 2, the left-to-right direction on the drawing sheet is an X direction, and the up-down direction on the same is a Y direction.

The marks 14 are arranged in line along the lateral direction (the lateral direction or the X direction in FIG. 2) on the platen surface 12 and the vertical direction (the vertical direction or the Y direction in FIG. 2) thereon (see, rows (a) to (g) and columns (A) to (K) in FIG.2).

According to the embodiment, the marks 14 lined up in the lateral direction (X direction) are configured to be identical in diameter. There are however exceptions. The exceptions are marks 14A, 14B, 14C, 14D, and 14E in FIG. 2. Specifically, the marks 14 on the row (a) are formed to have the same value in diameter. Likewise, the marks 14 on the row (b) are formed to have the same value in diameter, and the marks 14 on the row (c) are formed to have the same value in diameter. The same applies to the rows (d) and (e).

On the other hand, the diameter of the marks 14 on the row (a) differs from the diameter of the marks 14 on the row (b). Further, the diameter of the marks 14 on the row (b) differs from the diameter of the marks 14 on the row (c). According to the embodiment, the following repetitive pattern is an example: the row (a) is 8 mm in dia.; the row (b) is 12 mm in dia.; the row (c) is 16 mm in dia.; and the row (d) is 8 mm in dia.. The marks 14 on one row have a different diameter from the marks 14 on the other row adjacent to that row, as exemplified above.

Detailed description on the arrangement of the marks 14 will be further given. A mark 14a, which is located at the top left corner (the top left corner at the drawing sheet) of the platen surface 12 in FIG. 2, is a mark that works as a reference from among the plural marks 14. Specifically, according to the embodiment, the mark 14a is an origin of the reference coordinate system.

Using the mark 14a as the reference, the marks 14 being 8 mm in diameter are arranged in line along the lateral direction (X direction) (the row (a)). Px11, Px12, Px13, Px14, Px15 ... each define distances between the marks 14 (distances between the adjacent marks 14) arranged in line at the row (a) (see, FIG.2). The value of each distance Px11, Pxl2, Pxl3, Pxl4, Px15 ... is not the same.

Using a mark 14b as the reference, which is a distance Py11 distant in the vertical direction (Y direction) from the mark 14a, the marks 14 being 12 mm in diameter are arranged in line along the lateral direction (X direction) (the row (b)). Px21, Px22, Px23, Px24, Px25 ... each define distances between the marks 14 (distances between the adjacent marks 14) arranged in line at the row (b) (see, FIG.2). The value of each distance Px21, Px22, Px23, Px24, Px25 ... is not the same.

Using a mark 14c as the reference, which is a distance Py12 distant in the vertical direction (Y direction) from the mark 14b, the marks 14 being 16 mm in diameter are arranged in line along the lateral direction (X direction) (the row (c)). Px31, Px32, Px33, Px34, Px35 ... each define distances between the marks 14 (distances between the adjacent marks 14) arranged in line at the row (c) (see FIG. 2). The value of each distance Px31, Px32, Px33, Px34, Px35 ... is not the same.

In addition, according to the embodiment, distances between the marks 14 (the adjacent marks 14) arranged in line along columns (A) to (K) are different respectively.

According to the embodiment provided with the marks 14 as described above, when at least three marks 14 have been selected, it is possible to uniquely identify which marks the marks 14 selected are from among the marks 14 formed on the platen surface 12. Specifically, regarding the three marks 14 selected, it is possible to identify the three marks 14 based upon the sizes (diameters) of the marks 14 and the distances Px between adjacent marks 14 in the lateral direction (X direction) or the distances Py therebetween in the vertical direction (Y direction) (i.e., based upon a combination of the diameters, the distances Px, and the distances Py), as described above. As the three marks 14, three marks 14 arranged in a triangle shape can be conceived.

The control device 8 stores in advance information on arrangement of the marks 14 on the platen surface 12. Therefore, regarding the at least three marks 14 from among the marks 14 detected by image-capturing, the control device 8 can uniquely identify which marks the three marks 14 detected are from among the marks 14 on the platen surface 12, with information on the diameters, the distances Px in the lateral direction (X direction) and the distances Py in the vertical direction (Y direction).

According to the embodiment of the present invention, the measuring device 2 (more specifically, the control device 8) stores (memorizes) the reference coordinate system, as described above. The mark 14a (see, FIG. 2) is the origin of the reference coordinate system.

The reference coordinate system is a coordinate system having an X-Y-Z direction defined based upon the origin (the mark 14a). Specifically, a flat surface of the platen surface 12 is defined as an X-Y flat surface. A direction, which goes through the center of the mark 14a as the origin and is perpendicular to the X-Y flat surface (the flat surface of the platen surface 12), is defined as a Z-direction.

A point defined as the origin of the reference coordinate system is not limited to the center point of the mark 14a located on the top left corner of the platen surface 12 and may be a center point of one of the other marks 14. Described next is a method of measuring a three-dimensional shape of the object 1 by the measuring device 2.

First of all, in order to measure a three-dimensional shape of the object 1, an operator, for example, mounts the object 1 on the platen surface 12 of the platen 10. The measuring unit 3 can be moved manually by the operator.

At the time of measuring of the object 1, the platen 10 is employed, which has a size such that the object 1 stays within the platen surface 12. Further, the platen 10 is employed, which has a size such that multiple (at least three or more) marks 14 on the platen surface 12 can be visibly recognized (i.e., image-captured) even in a condition where the object 1 is mounted on the platen surface 12.

Specifically, when the platen surface 12 and the object 1 are observed from an image capturing position of the CCD camera 4, at least three or more marks 14 can be visibly recognized (image captured). When an image-capturing of the entire object 1 is divided into multiple times, at least three ore more marks 14 can be visibly recognized (image-captured) every individual region divided.

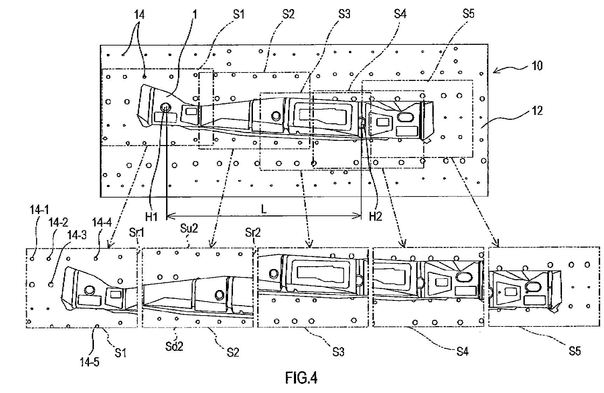

According to the embodiment of the present invention, as illustrated in FIG. 4 as an example, the object 1 is divided into five regions as the regions S1 to S5 so as to be image-captured. The regions S1 to S5 are determined such that at least three marks 14, which appear triangle shaped, can be visibly recognized (image captured) in each of the regions S1 to S5.

Specifically, the regions S1 to S5 can be each determined by the operator who moves the measuring unit 3 or changes settings of the CCD camera 4, so that an image-captured range is altered. According to the embodiment of the present invention, the measuring unit 3 does not have to be moved in parallel to the platen surface 12.

Each of the regions S1 to S5 may have a different area. Data representing an image captured by the CCD camera 4 (hereinafter, simply referred to as captured image data) is stored in a storage that is possessed by the control device 8 and is not illustrated.

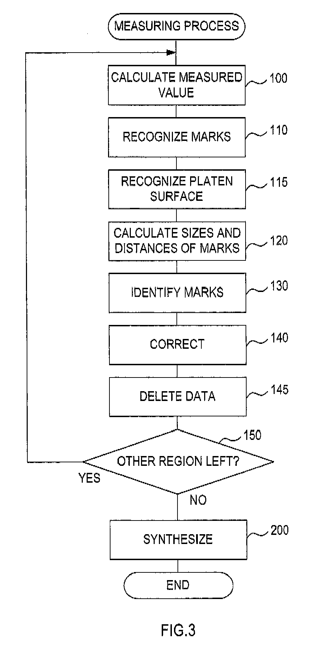

Next described below with reference to FIG. 3 is a measuring process implemented by the control device 8 to measure a three-dimensional shape of the object 1. In the measuring process of FIG. 3, the control device 8 calculates, from the captured image data, a measured value Ps1 (s1xn, s1yn, s1zn) of a three-dimensional shape of the object 1 at the first image-captured region (e.g., the region S1) (Step 100). The "s1x" denotes an X coordinate value, the "s1y" denotes a Y coordinate value, and the "s1z" denotes a Z coordinate value. The index "n" denotes the "n" number of points to be measured. That is, the "s1xn" denotes the "n" number of X coordinate values, the "s1yn" denotes the "n" number of Y coordinate values, and the "s1zn" denotes the "n" number of Z coordinate values.

In other words, the measured value of the three-dimensional shape includes the "n" number of (X coordinate value, Y coordinate value, Z coordinate value). The greater the "n" number is, a more precise three-dimensional shape is obtained. The measured value is calculated based upon comparison of the imaged lattice pattern and the reference lattice pattern as described above. That is, the external shape of the object 1 is calculated backward with reference to a distortion degree of the imaged lattice pattern distorted in response to the external shape of the object 1. Here, the X coordinate value, the Y coordinate value, the Z coordinate value are calculated with reference to the partial coordinate system for the region S1.

Next, the control device 8 recognizes the marks 14 from the captured image data of the region S1 (Step 110). Here, the control device 8 recognizes all the marks 14 that the control device 8 can recognize. The control device 8 calculates a center position of each of the marks 14 recognized.

The control device 8 identifies the flat surface of the platen surface 12 from the captured image data of the region S1 (Step 115). Specifically, the control device 8 can identify the flat surface of the platen surface 12 from the arrangement of the marks 14 extracted. The control device 8 then compares the flat surface of the platen surface 12 identified from the captured image data with the platen surface 12 (i.e., the X-Y flat surface) on the reference coordinate system already stored in the control device 8 and calculates a deviation therebetween. Specifically, the control device 8 calculates an inclination of the platen surface 12 identified from the captured image data (in other words, a postural inclination of the CCD camera 4 relative to the platen surface 12). The control device 8 converts, based upon the deviation calculated, a value of the measured value Ps1 (s1xn, s1yn, s1zn) to a value with reference to the X-Y flat surface of the reference coordinate system stored in the control device 8.

The purpose of the above is to match the X-axis direction and the Y-axis direction out of the X-axis, Y-axis, and Z-axis directions on the partial coordinate system to the X-axis direction and the Y-axis direction of the reference coordinate system. In this case, the Z-axis directions match each other naturally. Here, each of the axial directions on the partial coordinate system matches (specifically become parallel) to each of the axial directions on the reference coordinate system, and the origin (X=0, Y=0) on the X-Y flat surface or the origin (X=0, Y=O, Z=0) on the X-Y-Z coordinate system is still different between the both partial and reference coordinate systems.

Next, in order to completely match the partial coordinate system to the reference coordinate system, in other words, in order to convert a measured value Ps1 (s1xn, s1yn, s1zn) based upon the partial coordinate system to a value based upon the reference coordinate system, given marks 14 (three marks 14 forming a triangle shape) are extracted. Further, the control device 8 calculates the sizes (diameters) of the marks 14 recognized and center distances P between the adjacent marks 14 (step 120).

Specifically, as an example, the control device 8 extracts marks 14-1, 14-2, and 14-3 (see FIG. 4), which appears triangle shaped, from among the marks 14 recognized at Step 110. The control device 8 then calculates the sizes (diameters) of the marks 14-1, 14-2, and 14-3 and center distances P between adjacent marks 14 (Step 120).

The control device 8 can extract three marks 14 in which the object 1 is interposed. For example, in FIG. 4, the control device 8 can extract marks 14-1, 14-4 and 14-5 instead of the marks 14-1, 14-2 and 14-3.

According to the embodiment of the present invention, by calculating the sizes (diameters) of the three marks 14 and the center distances between the adjacent marks 14 out of the three marks 14 (alternatively, lengths of three sides of a triangle having the three marks 14 as its vertices or a proportion of the lengths), the three marks 14 can be identified.

According to the embodiment of the present invention, the X-axis direction or the Y-axis direction of the reference coordinate system stored in the control device 8 can not be identified based upon the measured value Ps1 (s1xn, s1yn, s1zn). According to the embodiment of the present invention, the control device 8 calculates the sizes (diameters) of the three marks 14-1, 14-2, and 14-3 and the center distances P between individual adjacent marks.

The control device 8 then identifies to which marks 14 stored in the control device 8 (the marks 14 on the reference coordinate system) the three marks 14-1, 14-2, and 14-3 correspond respectively (Step 130).

Further, the three marks 14 can be identified based upon the sizes (diameters) of the marks 14 and values of respective internal or external angles of the triangle having the three marks 14 as its vertices.

The control device 8 corrects the measured value Ps1 (s1xn, s1yn, s1zn) in such a manner that the three marks 14-1, 14-2, and 14-3 identified each overlap three corresponding marks 14 on the reference coordinate system already stored in the control device 8 (Step 140). This measured value corrected (hereinafter, referred to as a corrected measured value) is a value based upon the reference coordinate system stored in the control device 8.

As described above, according to the embodiment, even if the mark 14a located at the top left corner of the platen surface 12 is not included in the image captured region (in other words, even if an image capturing is not performed so as to contain the origin position of the reference coordinate system), the measured value based upon the captured image data and the partial coordinate system can be converted to a value based upon the reference coordinate system with reference to the data on the marks 14 contained in the captured image data and the data on the marks 14 on the reference coordinate system already stored in the control device 8.

Since the measured value Ps1 (s1xn, s1yn, s1zn) contains measured values denoting the platen surface 12 and the marks 14, the measured values denoting the platen surface 12 and the marks 14 are deleted (Step 145).

When there is a region not image-captured (non-measured region) left (Step 150:Yes), Step 100 to Step 145 are repeatedly performed for the non-measured region in the same manner. When Step 100 to Step 145 are completed for all regions (Step 150:No), the process moves to Step 200. More specifically, according to the embodiment, when all processes of Step 100 to Step 145 are completed for all the regions S1 to S5, the corrected measured values obtained for all the regions S1 to S5 are synthesized (Step 200).

As described above, the corrected measured values are the values based upon the reference coordinate system. That is, the coordinate system for each corrected measured value for each region S1 to S5 is the same. Therefore, the corrected measured values for the regions S1 to S5 can be easily synthesized.

According to the embodiment of the present invention, the three-dimensional shape of the object 1 is measured by dividing the object 1 to the five regions S1 to S5. The division number however is not limited to five. Further, for example, it is possible to image-capture the regions S1 and S4 and to measure a distance L (see FIG. 4) between a hole H1 in the region S1 (see FIG. 4) and a hole H4 in the region S4 (see FIG. 4), without measuring the regions S2 and S3.

As described above, according to the measuring method of the three-dimensional shape of the embodiment, it is possible to easily synthesize the measured values of the regions S1 to S5 by matching the coordinate systems of the measured values of the regions S1 to S5 by the marks 14 formed on the platen surface 12. Further, because there is no need to provide marks on the object 1 itself, it is possible to avoid a portion where a three-dimensional shape is not measured.

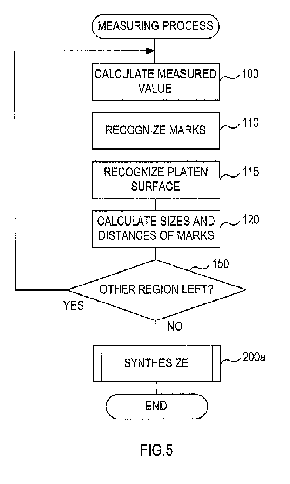

Next described below is a second embodiment of the present invention with reference to FIGS. 5 to 7. The same structures or processes as the ones of the first embodiment are identified by the same reference numbers and detailed explanation thereof will not be repeated. The second embodiment differs from the first embodiment in that information on arrangement of the marks 14 (specifically, the sizes (diameters) of the marks 14, the central distances Px, Py between the marks 14, etc.) is not stored by the control device 8.

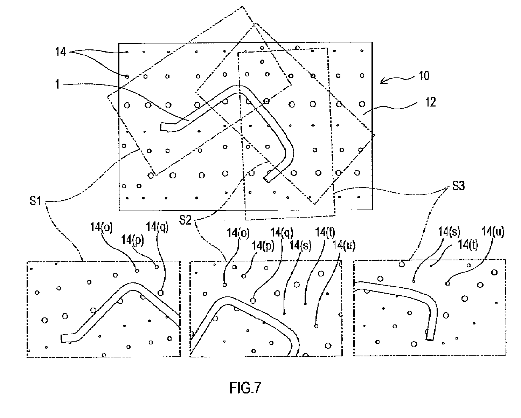

According to the second embodiment, as illustrated in FIG. 7, the object 1 is assumed to be a bent-pipe molding. According to the second embodiment of the present invention, in the same manner as the first embodiment, the image-capturing of the object 1 by the CCD camera 4 is dividedly implemented several times. According to the second embodiment, the entire object 1 is image-captured by being divided into three regions S1 to S3. In this case, the regions S1, S2, and S3 are determined so that at least three marks 14 (three marks 14 appearing triangle shaped) are not hidden behind the object 1 every time of image-capturing.

Further, the regions S1, S2, and S3 are determined such that the at least three marks 14 are contained in an overlapped portion among the regions S1, S2, and S3. In FIG. 7, the regions S1 and S2 share an overlapped portion, and the regions S2 and S3 share an overlapped portion. The regions S1, S2, and S3 are determined such that common three marks 14 are contained in the regions S1 and S2 and common three marks 14 are contained in the regions S2 and S3.

As illustrated in FIG. 7, the region S1 has three marks 14(o), 14(p), and 14(q), and the region S2 has the same three marks 14(o), 14(p), and 14(q). Further, the region S2 has other three marks 14(s), 14(t), and 14(u), and the region S3 has the same three marks 14(s), 14(t), and 14(u).

Next described below is a measuring process of a three-dimensional shape implemented by the control device 8 according to the second embodiment with reference to FIG. 5. The control device 8 calculates a measured value Ps1 (s1xn, s1yn, s1zn) of the region S1 (Step 100). The measured value is described above in the first embodiment.

The control device 8 recognizes marks 14 from the captured image data of the region S1 (Step 110). Here, the control device 8 recognizes all the marks 14 which the control device 8 can identify. The control device 8 also calculates the center position of each of the marks 14 recognized.

The control device 8 identifies a flat surface of the platen surface 12 from the captured image data of the region S1 (Step 115). Specifically, the control device 8 can identify the flat surface of the platen surface 12 from the arrangement of the marks 14 extracted. The control device 8 calculates the sizes (diameters) of the marks 14 recognized and the center distances P between the adjacent marks 14 (Step 120).

When there is a region left, which has not been image-captured (Step 150:Yes), the control device 8 implements the processes from Step 100 to Step 120 for the region not image-captured. When all the processes from Step 100 to Step 120 are completed for all the regions (Step 150: No), the control device 8 moves to the process of Step 200a. Hereinafter, the measured value for the region S1 is Ps1, the measured value for the region S2 is Ps2, and the measured value for the region S3 is Ps3.

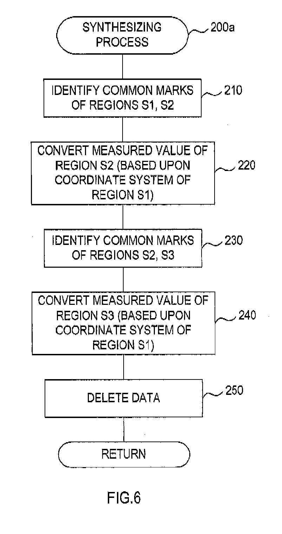

In Step 200a, the control device 8 implements a process to synthesize the measured values Ps1, Ps2, and Ps3 for the regions S1, S2, and S3. The synthesizing process will be described below with reference to FIG. 6.

First, in the synthesizing process, the control device 8 identifies the common marks 14 included in both of the regions S1 and S2 (Step 210). Here, the platen surfaces 12 at the regions S1 and S2 identified at Step 115 are actually included in the same flat surface.

Then, the measured value Ps2 (s2xn, s2yn, s2zn) of the region S2 is corrected in such a manner that data (measured value) of the platen surface 12, which is contained in the captured image data of the region S1, and data (measured value) of the platen surface 12, which is contained in the captured image data of the region S2, indicate the same flat surface.

In this case, a similarity relation is found between a triangle with the three marks 14 (i.e., the mark 14(o), the mark 14(p), and the mark 14(q)) as its vertexes, which are recognized at the region S1, and a triangle with the three marks (i,e., the mark 14(o), the mark 14(p), and the mark 14(q)) as its vertexes, which are recognized at the region S2.

Based upon their similarity relation, correlation is implemented between the three marks 14 (i.e., the mark 14(o), the mark 14(p), and the mark 14(q)) recognized at the region S1 and the three marks (i.e., the mark 14(o), the mark 14(p), and the mark 14(q)) recognized at the region S2 (Step 210).

The purpose of the correlation therebetween is to identify the mark 14(o), the mark 14(p), and the mark 14(q) (Step 210). The three marks 14 can be identified based upon the sizes (diameters) of the marks 14 and respective internal or external angles of the triangle having the three marks 14 as its vertexes.

The measured value Ps2 (s2xn, s2yn, s2zn) of the region S2 is converted in such a manner that the three marks 14(o), 14(p), and 14(q) identified for the region S2 overlie the three marks 14(o), 14(p), and 14(q) identified for the region S1 (Step 220).

Specifically, coordinates (x11, y1, z11), (x12, y12, z12), and (x13, y13, z13) at the centers of the three marks 14(o), 14(p), and 14(q) in the region S1 are calculated from the measured value Ps1 of the region S1. Coordinates (x21, y21, z21), (x22, y22, z22), and (x23, y23, z23) at the centers of the three marks 14(o), 14(p), and 14(q) in the region S2 are calculated from the measured value Ps2 of the region S2. A partial coordinate system for the measured value Ps2 of the region S2 is converted to a partial coordinate system for the region S1 with reference to the coordinates (x11, y11, z11), (x12, y12, z12), and (x13, y13, z13) of the region S1 and the coordinates (x21, y21, z21), (x22, y22, z22), and (x23, y23, z23) of the region S2.

Next, the platen surfaces 12 at the regions S2 and S3 identified at Step 115 are practically included in the same flat surface.

Then, the measured value Ps3 (s3xn, s3yn, s3zn) of the region S3 is corrected in such a manner that data (measured value) of the platen surface 12, which is contained in the captured image data of the region S2, and data (measured value) of the platen surface 12, which is contained in the captured image data of the region S3, indicate the same flat surface.

In this case, a similarity relation is found between a triangle with the three marks 14 (i.e., the mark 14(s), the mark 14(t), and the mark 14(u)) as its vertexes, which are recognized at the region S2, and a triangle with the three marks (i.e., the mark 14(s), the mark 14(t), and the mark 14(u)) as its vertexes, which are recognized at the region S3.

Based upon their similarity relation, correlation is implemented between the three marks 14 (i.e., the mark 14(s), the mark 14(t), and the mark 14(u)) recognized at the region S2 and the three marks (i.e" the mark 14(s), the mark 14(t), and the mark 14(u)) recognized at the region S3 (Step 230).

The purpose of the correlation therebetween is to identify the marks 14 (i.e., the mark 14(o), the mark 14(p), and the mark 14(q)) (Step 230). The measured value Ps3 (s3xn, s3yn, s3zn) of the region S3 is converted in such a manner that the three marks 14(s), 14(t), and 14(u) identified for the region S3 overlie the three marks 14(s), 14(t), and 14(u) identified for the region S2. In other words, a partial coordinate for the measured value Ps3 of the region S3 is converted to the partial coordinate system for the region S2 (the measured value Ps3 is converted to a value based upon the partial coordinate system for the region S2).

In the same manner as the process of Step 220, the measured value, which is obtained by converting the measured value of the region S3 to the value based upon the partial coordinate system for the region S2, is converted to a value based upon the partial coordinate system of the region S1 (Step 240). Each measured value Ps contains measured values denoting the platen surface 12 and the marks 14, and the measured values denoting the platen surface 12 and the marks 14 are deleted (Step 250). The control process is then terminated. As a result, each of the measured values Ps1, Ps2, and Ps3 is converted to a value based upon the partial coordinate system of the region S1.

As described above, also by the measuring method of the second embodiment, each measured value can be converted to a value based upon the common coordinate system by use of the marks 14 provided on the platen surface 12, thus enabling to synthesize each measured value easily. Further, since the marks 14 are not provided at the object 1 itself, it is possible to avoid a portion where a three-dimensional shape is not measured.

The present invention should not be construed as limited to the embodiments set forth above and can be achieved in any modes within the scope of the present invention.

According to the embodiments described above, information on the reference coordinate system is stored in the control device 8 in advance. However, the information on the reference coordinate system can be obtained as follows, for example. The following description assumes that the measuring unit 3 is an automatic device which operates automatically.

The control device 8 implements an initializing process when the measuring device 2 starts up. Specifically, first of all, the measuring unit 3 is returned to a predetermined origin position (initial position). Calibration of the measuring unit 3 is then implemented at the origin position. Specifically, at the origin position, the CCD camera 4 image-captures the platen surface 12 of the platen 10 so as to include the mark 14a. The reference coordinate system can be formed with the position of the mark 14a as the origin, the mark 14a being image-captured by the measuring unit 3 positioned at the origin position (initial position).

The following method is conceivable as an example of a method of identifying the mark 14a. Specifically, the control device 8 stores in advance an estimated position of the mark 14a when the platen surface 12 is image-captured by the measuring unit 3 located at the origin position (initial position). The control device 8 then identifies, from information on the estimated position, the mark 14a from among the marks 14 contained in the captured image data. Further, only the mark 14a can be formed to have a unique shape so as to identify the mark 14a based upon the unique shape.

The measuring unit 3 can be movable automatically in accordance with a predetermined program. Further, the measuring unit 3 can be mounted on a robot arm and be moved in response to an operation of the robot arm.

According to the above first and second embodiments, a surface on which the object 1 is mounted is configured to be a platen surface (flat surface). However, as far as at least three marks can be identified, the surface on which the object 1 is mounted can be configured to be a surface other than the flat surface.

## Claims

1. A method of measuring a three-dimensional shape of an object to be measured by use of a three-dimensional shape measuring apparatus, the method comprising the steps of:
forming a plurality of marks, which is at least three or more, on a background surface configured as a background of the object to be measured at a time of three-dimensionally measuring of the object to be measured, wherein the plurality of marks are formed so as to uniquely determine a combination of respective sizes of at least three marks arbitrarily selected from among the plurality of marks and intervals between the marks;
storing information on arrangement of the formed marks in a storing device;
three-dimensionally measuring a partial shape of, or an entire shape of, the object to be measured by the three-dimensional shape measuring apparatus, wherein a region, which is a measurement target, is divided into a plurality of regions and the three-dimensional measuring is performed, and the shape of the object to be measured is three-dimensionally measured with the at least three marks each time that each of the plurality of regions is measured;
each time that each of the plurality of regions is measured, converting, based upon information of the measured marks and the information on arrangement of stored marks that are the marks stored by the storing device, X-Y-Z coordinate values representing a three-dimensional shape of the object to be measured to coordinate values in a reference coordinate system based upon the information on arrangement of the marks stored; and
synthesizing coordinate values obtained after the X-Y-Z coordinate values are converted to the coordinate values in the reference coordinate system for each of the plurality of regions.

2. A method of measuring a three-dimensional shape of an object to be measured by use of a three-dimensional shape measuring apparatus, the method comprising the steps of:
forming a plurality of marks, which is at least three or more, on a background surface configured as a background of the object to be measured at a time of three -dimensionally measuring of the object to be measured, wherein the plurality of marks are formed so as to uniquely determine a combination of respective sizes of at least three marks arbitrarily selected from among the plurality of marks and intervals between the marks;
storing information on arrangement of the formed marks in a storing device;
three-dimensionally measuring a partial shape of, or an entire shape of, the object to be measured by the three-dimensional shape measuring apparatus, wherein a region, which is a measurement target, is divided into a plurality of regions and the three-dimensional measuring is performed, and the shape of the object to be measured is three-dimensionally measured with the at least three marks, which are shared by at least two adjacent regions, when the at least two adjacent regions are measured;
converting X-Y-Z coordinate values, which are measured values obtained by measuring for two adjacent regions and represent a three-dimensional shape of the object to be measured, to coordinate values at a common coordinate system based upon the at least three marks shared by the two regions; and
synthesizing coordinate values converted to values at the common coordinate system for each of the plurality of regions.

3. A method of measuring a three-dimensional shape of an object to be measured according to claim 1 or 2, further comprising the step of forming the marks to be round by at least one of machine processing, printing, and putting stickers.

4. A method of measuring a three-dimensional shape of an object to be measured according to claim 3, further comprising the step of forming, by machine processing, the marks to have a predetermined depth from a surface of the background surface and a bottom.

5. A method of measuring a three-dimensional shape of an object to be measured according to any one of claims 1-4, wherein the background surface is a flat surface, and the method further comprises the step of mounting the object to be measured on the background surface.

6. A method of measuring a three-dimensional shape of an object to be measured according to claim 1, wherein the step of measuring the three-dimensional shape of the object to be measured includes the step of measuring the three-dimensional shape of the object to be measured with the at least three marks shared by adjacent measured regions.

7. A method of measuring a three-dimensional shape of an object to be measured according to any one of claims 1-6, wherein the background surface is a flat surface, the step of measuring the three-dimensional shape of the object to be measured includes the step of identifying the background surface based upon the at least three marks measured each time that each of the plurality of regions are measured, and the step of converting includes at least the step of correcting the X-Y-Z coordinate values for each measurement in such a manner that data denoting the background surface identified for each measurement indicate an identical background surface.

8. A three-dimensional shape measuring system comprising:
a background surface configured as a background of an object to be measured and formed with a plurality of marks, which is at least three or more;
a control device that stores information on arrangement of the marks in advance; and
a three-dimensional shape measuring apparatus controlled by the control device and measuring three-dimensionally a shape of the object to be measured,
wherein the control device controls the three-dimensional shape measuring apparatus such that the object to be measured is measured with the at least three marks when the three-dimensional shape measuring apparatus measures three -dimensionally the shape of the object to be measured, the control device is configured to convert, based upon information of the marks measured by the three-dimensional shape measuring apparatus and the information on arrangement of the marks stored in the control device in advance, X-Y-Z coordinate values representing a three-dimensional shape of the object to be measured to coordinate values in a reference coordinate system based upon the information on arrangement of the stored marks, and the reference coordinate system includes a device to synthesize coordinate values obtained after the X-Y-Z coordinate values are converted to the coordinate values in the reference coordinate system, and
wherein the plurality of marks is formed so as to uniquely determine a combination of respective sizes of the at least three marks arbitrarily selected from among the plurality of marks and intervals between the marks.
